# DEMANDE DE BREVET EUROPEEN

(11) **EP 2 439 659 A1**
(43) Date de publication de la demande: **11.04.2012**
(21) Numéro de dépôt: 11183897.5
(22) Date de dépôt: 05.10.2011
(51) Int. Cl.: G06F 17/30

(54) **Procédé de mise à jour d'un index inversé et serveur mettant en oeuvre ce procédé**

(30) Priorité: 06.10.2010 FR 1058095
(71) Demandeur: Commissariat à l'Énergie Atomique et aux Énergies Alternatives, 75015 Paris (FR)
(72) Inventeur: Brochard, Pierre, 91530 Saint Cheron (FR)
(74) Mandataire: Delumeau, François Guy

(57) **Abrégé**

Ce procédé de mise à jour d'un index inversé, à partir d'au moins un document électronique, chaque document électronique étant constitué par au moins un ensemble ordonné d'objets, comporte, pour chacun desdits objets :
- une étape (E30) d'identification d'un descripteur dudit objet, ce descripteur étant représenté sous forme d'un arbre ;
- une étape (E50) de détermination d'une feuille terminale dudit arbre ; et
- une étape (E60) de mise à jour d'un paquet d'informations pointé par ladite feuille, ledit paquet d'informations comportant au moins la liste desdits documents comportant ledit objet.

## Description

La présente invention se situe dans le domaine des systèmes de gestion d'un ensemble de documents électroniques.

Dans ce document, la notion de « document électronique » est à comprendre au sens large et désigne la représentation d'un document sous forme d'une structure de données numériques entreposables dans la mémoire d'un ordinateur et transmissibles d'un ordinateur à un autre.

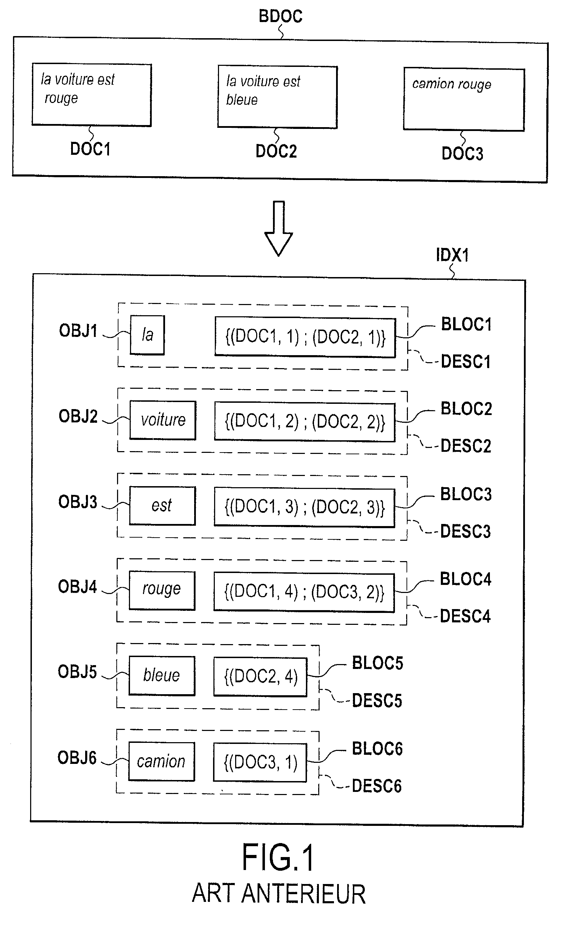

Dans le domaine de l'indexation de documents électroniques, il est connu de considérer chaque document électronique comme un ensemble ordonné d'objets (mots, champs,...) et de constituer un index inversé de ces objets, comme expliqué ci-dessous en référence à la **figure 1****.**

Sur cette figure, on a représenté une base documentaire BDOC de trois documents électroniques DOC1, DOC2, DOC3 et un index inversé IDX1 de cette base documentaire.

Dans cet exemple, chaque document peut être considéré comme un ensemble ordonné de mots ; par exemple, le document DOC1 est l'ensemble ordonné des mots « la », « voiture », « est » et « rouge ».

Dans l'ensemble de la figure 1, la base documentaire BDOC comporte ainsi 6 mots OBJ1 à OBJ6, à savoir les mots « la », « voiture », « est », « rouge », « bleue » et « camion ».

Pour chaque mot (par exemple OBJ1, « la ») l'index inversé IDX1 associe un bloc d'informations (BLOC1) comportant :
- les documents (DOC1, DOC2) de la base documentaire (BDOC) comportant ce mot ; et
- la position du mot dans ce document.

Par exemple le mot « la » occupe la première position dans chacun des documents DOC1 et DOC2.

Il est aussi connu de considérer un document comme un ensemble ordonné de champs, un champ étant une portion identifiable du document comportant au minimum un nom et un contenu.

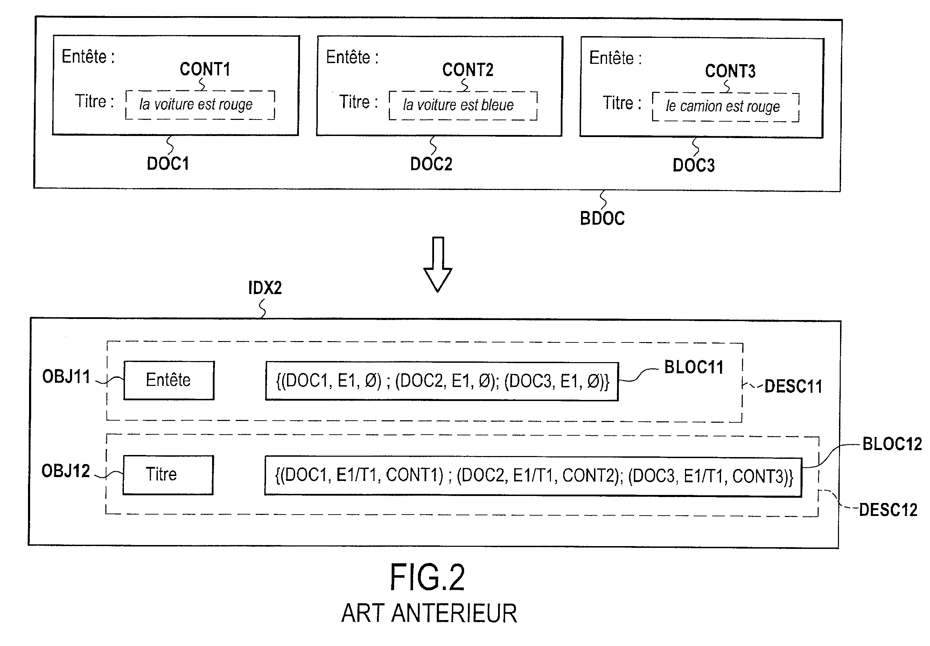

Par exemple, dans l'exemple de la **figure 2****,** chacun des documents DOC1 à DOC3 de la base documentaire BDOC comporte deux champs ordonnés de noms « Entête » et « Titre », le contenu CONT1 du champ « Titre » du document DOC1 étant « la voiture est rouge ».

Pour chaque champ (par exemple OBJ12, « Titre »), l'index inversé IDX2 associe un bloc d'informations (BLOC12) comportant les documents (DOC1, DOC2, DOC3) de la base documentaire comportant ce champ, la position du champ dans le document (premier titre « T1 » du premier en-tête « E1 »).

Dans l'exemple de la figure 2, bloc BLOC12 comporte aussi le contenu (CONT1, CONT2, CONT3) de ce champ dans chacun des documents, un contenu vide étant représenté par le symbole « φ ».

En généralisant les figures 1 et 2, chaque document de la base documentaire BDOC peut être considéré comme un ensemble ordonné d'objets OBJi (mots, champs), l'index inversé IDX1, IDX2, associant à chacun des objets OBJi, un bloc d'informations BLOCi comportant au moins les documents comportant cet objet et la position de l'objet dans ces documents.

Parfois, un index inversé peut ne pas contenir la position des objets dans les documents.

Le couple constitué par un mot OBJi et son bloc d'informations associé BLOCi est communément appelé « descripteur d'objet » et noté DESCi.

Les index inversés tels que décrits précédemment sont très pratiques car ils permettent facilement d'identifier les documents d'une base documentaire comportant un objet particulier (champ ou mot) et lorsque l'index inversé mémorise aussi la position, de localiser cet objet dans le document.

Malheureusement, la création et la mise à jour d'index inversés pour des bases documentaires comportant un nombre très important de documents, par exemple plusieurs millions, selon les méthodes connues de l'état de la technique sont des opérations excessivement coûteuses en temps de calcul pour un ordinateur.

### Objet et résumé de l'invention

L'invention vise un procédé de mise à jour d'un index inversé à partir d'au moins un document électronique, ce procédé ne présentant pas les inconvénients de ceux connus de l'état de la technique.

On notera que lorsque cet index inversé n'existe pas, la mise à jour de cet index inversé désigne sa création.

Plus précisément, et selon un premier aspect, l'invention concerne un procédé de mise à jour d'un index inversé à partir d'au moins un document électronique, chaque document électronique étant constitué par au moins un ensemble ordonné d'objets.

Ce procédé comporte, pour chacun des objets :
- une étape d'identification d'un descripteur de cet objet, ce descripteur étant représenté sous forme d'un arbre ;
- une étape de détermination d'une feuille terminale de l'arbre, ladite détermination comportant, si ladite feuille terminale n'existe pas, la création de cette feuille terminale et son ajout dans l'arbre, sans destruction de noeud ni autre réorganisation de l'arbre; et
- une étape de mise à jour d'un paquet d'informations de taille variable pointé par la feuille par concaténation, ce paquet d'informations comportant au moins la liste des documents comportant cet objet.

Corrélativement, l'invention concerne un serveur apte à mettre à jour un index inversé à partir d'au moins un document électronique, ce document électronique étant constitué par au moins un ensemble ordonné d'objets.

Ce serveur comporte :
- des moyens d'identification, pour chacun des objets, d'un descripteur de cet objet, ce descripteur étant représenté sous forme d'un arbre ;
- des moyens de détermination d'une feuille terminale de cet arbre, ladite détermination comportant, si ladite feuille terminale n'existe pas, la création de cette feuille terminale et son ajout dans l'arbre, sans destruction de noeud ni autre réorganisation de l'arbre; et
- des moyens de mise à jour d'un paquet d'informations de taille variable pointé par cette feuille par concaténation, ce paquet d'informations comportant au moins la liste des documents comportant cet objet.

Bien entendu, l'ajout d'une nouvelle feuille à l'arbre comporte l'ajout de ses parents si ceux-ci n'existent pas, de manière à rattacher la feuille terminale à la racine de l'arbre.

De façon très avantageuse, la mise à jour d'un index inversé conformément à l'invention n'impacte que les feuilles terminales. Par conséquent, lors de l'ajout d'un ou plusieurs documents à la base documentaire, on vient mettre à jour ou créer la branche de chacun des arbres qui représente les descripteurs de tous les objets présents dans ces documents ajoutés ce qui minimise les modifications à faire dans la base documentaire.

Il est à noter que la création ou l'expansion de chaque descripteur d'objets pour tous les objets des documents est plus avantageuse en terme de taille mémoire et de temps de calcul si l'on traite plusieurs documents en même temps.

Par conséquent, plus le nombre de documents traités en même temps est important, plus le gain par document est important.

De façon très avantageuse, pour chaque descripteur d'objet, les noeuds de l'arbre, les paquets d'informations et les blocs d'informations peuvent être stockés de manière indépendante dans la base documentaire.

Au minimum, le paquet d'informations pointé par une feuille comporte la liste des documents comportant cet objet.

Dans un autre mode de réalisation, le paquet d'informations comporte aussi la position de l'objet dans chacun des documents de la liste.

Dans un mode préféré de réalisation, le paquet d'informations comporte en outre la version du document, le procédé comportant une étape de mise à jour d'une structure de données indépendante du descripteur et comportant la dernière version des documents.

Ce mode de réalisation est particulièrement avantageux car il permet, lorsqu'un document est modifié pour ne plus comporter un objet de l'index inversé, de ne pas mettre à jour le bloc d'informations lui-même mais simplement le numéro de version dans la structure indépendante.

On gagne par conséquent un temps très important pour la mise à jour de ces informations.

Différentes méthodes peuvent être utilisées pour déterminer la feuille terminale impactée par la mise à jour de l'index inversé.

Par exemple, la détermination de la feuille terminale peut se faire de façon aléatoire.

En variante la feuille terminale est déterminée en appliquant une fonction prédéfinie aux identifiants des documents concernés par la mise à jour, par exemple une fonction de hachage.

Conformément à cette caractéristique particulière de l'invention, si l'on vient mettre à jour un même groupe de documents électroniques, les mêmes feuilles terminales seront concernées par la mise à jour.

Dans un mode particulier de réalisation, le procédé de mise à jour selon l'invention comporte une étape de compression du paquet d'informations.

Selon un deuxième aspect, l'invention concerne un procédé de traitement d'une requête d'obtention d'au moins un document électronique, cette requête comportant au moins un objet.

Ce procédé comporte :
- une étape d'obtention d'un descripteur de cet objet, ce descripteur étant représenté sous forme d'un arbre ;
- une étape de parcours de l'arbre jusqu'à au moins une feuille terminale de l'arbre ;
- une étape d'obtention d'un paquet d'informations pointé par la feuille, ce paquet comportant au moins un identifiant de document susceptible de comporter l'objet ; et
- une étape de présentation de l'identifiant des documents compatibles avec la requête.

Corrélativement, l'invention vise un serveur apte à traiter une requête d'obtention d'au moins un document électronique, cette requête comportant au moins un objet.

Ce serveur comporte :
- des moyens d'obtention d'un descripteur de cet objet, ce descripteur étant représenté sous forme d'un arbre ;
- des moyens de parcours de cet arbre jusqu'à au moins une feuille terminale de cet arbre ;
- des moyens d'obtention d'un paquet d'informations pointé par cette feuille, ce paquet comportant au moins un identifiant de documents susceptible de comporter cet objet ; et
- des moyens de présentation de l'identifiant des documents compatible avec la requête.

Dans sa forme la plus simple, la requête d'obtention comporte simplement un objet et on présente l'identifiant des documents comportant cet objet.

Mais l'invention permet le traitement de requêtes complexes visant par exemple à obtenir les documents comportant les objets répondant à une expression régulière.

Dans ce mode de réalisation, les documents compatibles avec cette requête sont ceux qui répondent à l'expression régulière précitée.

Conformément à l'invention, il se peut, dans certains modes de réalisation, qu'un document identifié dans un paquet d'informations ne comporte pas l'objet recherché. C'est notamment le cas lorsque le descripteur de l'objet comporte également la version du document au moment de la mise à jour du descripteur, le descripteur n'étant pas modifié lorsqu'une nouvelle version du document est ajoutée à la base documentaire.

Plus précisément, dans ce mode de réalisation, le paquet d'informations comporte un premier numéro de version du document et le procédé de traitement selon l'invention comporte :
- une étape d'obtention d'un deuxième numéro de version dudit document dans une structure de données différente dudit descripteur ;
- l'étape de présentation ne prenant en compte que les identifiants dont lesdits premier et deuxième numéros de version sont identiques.

Quoiqu'il en soit, et de façon très avantageuse, lorsque le serveur reçoit une requête de la part de l'utilisateur pour obtenir les documents comportant un objet, le serveur parcourt l'arbre associé à cet objet et en déduit la réponse en lisant le descripteur de cet objet sans avoir à lire tous les documents de la base pour y rencontrer les objets cherchés.

Dans le cas où la liste des documents à retrouver, en réponse à une requête, est restreinte à un sous-ensemble de documents répondant à cette expression régulière, ou par un autre critère, le serveur lit les identifiants de documents de paquets d'informations du descripteur de l'objet demandé, les compare à la liste des identifiants répondant à cette expression régulière et ne remonte que les blocs d'informations contenant au moins un identifiant de la liste.

Ceci autorise la remontée partielle d'un descripteur d'objets de la base.

L'invention autorise également le parcours rapide des contenus des objets situés dans les blocs d'informations pour y appliquer, au fur et à mesure de leur lecture éventuelle, des opérateurs de comparaison quelconque via une interface dédiée.

Des tris sont également possibles.

Dans un mode particulier de réalisation, les différentes étapes du procédé de mise à jour et du procédé de traitement de requête sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de mise à jour ou de procédé de traitement de requête tels que mentionnés ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention ressortiront de la description faite ci-dessous en référence aux dessins annexés qui en illustrent un exemple de réalisation dépourvu du tout caractère limitatif. Sur les figures :
- les figures 1 et 2 déjà décrites représentent des bases documentaires et des index inversés obtenus selon des méthodes de l'état actuel de la technique ;
- les figures 3 à 9 représentent des index inversés obtenus conformément à des procédés de mise à jour conformes à différents modes de réalisation de l'invention ;
- la figure 10 représente, sous forme d'organigramme, les principales étapes d'un procédé de mise à jour conforme à un mode particulier de réalisation de l'invention ;
- la figure 11 représente, sous forme d'organigramme des principales étapes d'un procédé de traitement d'une requête conforme à un mode particulier de réalisation de l'invention ; et
- la figure 12 représente un serveur conforme à l'invention dans un mode particulier de réalisation.

### Description détaillée de l'invention

Conformément à l'invention, on utilise des index inversés représentés sous forme d'arbre.

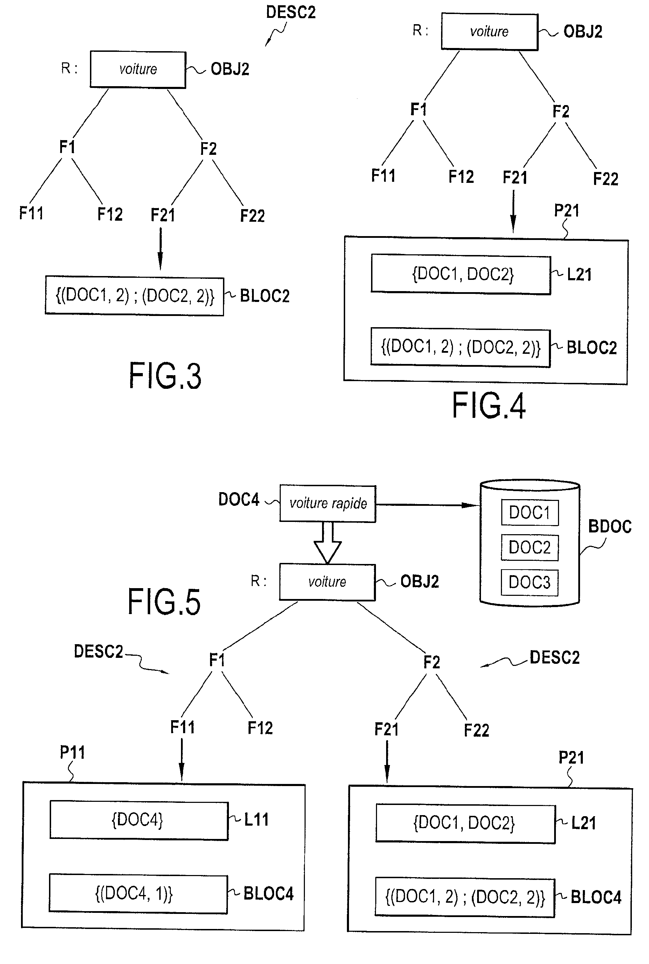

Par exemple, à la **figure 3****,** on a représenté un index inversé conforme à l'invention obtenu à partir de la base documentaire BDOC de la figure 1.

Il s'agit plus particulièrement de l'index inversé du mot « voiture » (OBJ2).

Dans l'exemple de la figure 3, le descripteur DESC2 de l'objet « voiture » est un arbre dont la racine R est l'identifiant « voiture » de cet objet, cet arbre comportant deux niveaux de feuilles (premier niveau : fils F1, F2 ; deuxième niveau : feuilles terminales F11, F12, F21 et F22), au moins certaines feuilles terminales de l'arbre pointant vers un paquet d'informations constitué, dans cet exemple par le BLOC2 lui-même déjà décrit en référence à la figure 1.

On rappelle à titre d'exemple, que le noeud F1 de l'arbre est un parent des feuilles terminales F11, F12.

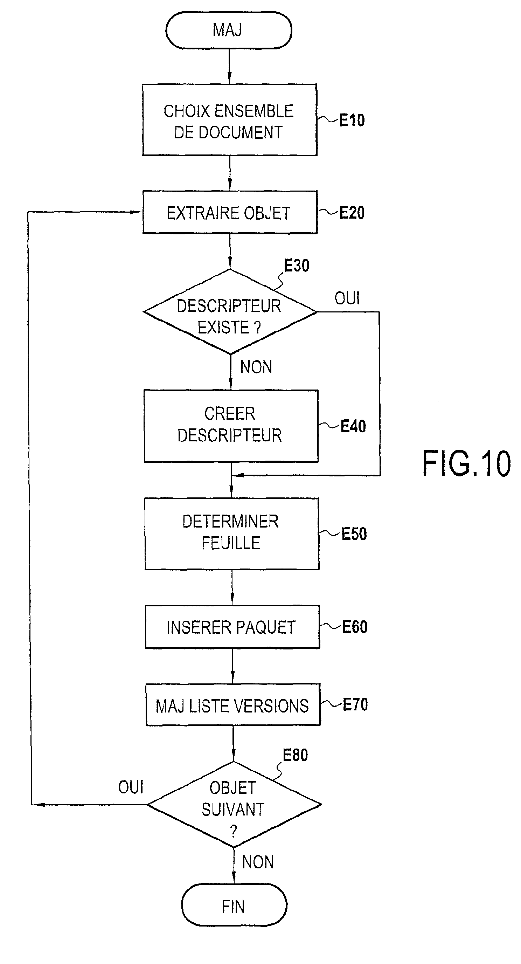

En référence à la **figure 10****,** nous allons maintenant décrire comment l'index inversé de la figure 3 peut être créé ou mis à jour.

Le procédé de mise à jour selon l'invention comporte une étape E10 au cours de laquelle l'utilisateur spécifie l'ensemble des documents de la base documentaire concernés par la mise à jour de l'index inversé. On suppose dans cet exemple qu'il s'agit des documents DOC1, DOC2 et DOC3 de la figure 1.

Ce procédé comporte ensuite une boucle constituée par les étapes E20 à E80 de traitement de chacun des objets de cet ensemble de documents.

Dans l'exemple de la figure 3, les objets sont les mots constituant ces documents.

Au cours d'une étape E20, on extrait un objet de l'ensemble des documents, par exemple le mot « voiture ».

On vérifie au cours d'une étape E30 si un descripteur existe pour cet objet. Lorsque c'est la première fois que l'on détecte le mot dans l'ensemble de documents, ce descripteur n'existe pas ; sinon il existe.

Si le descripteur n'existe pas, il est créé au cours d'une étape E40.

Dans l'exemple de la figure 3, l'arbre constituant chacun des descripteurs est un arbre à deux niveaux, le premier niveau comportant deux fils F1, F2, chacun de ces fils comportant, à un deuxième niveau deux feuilles terminales F11, F12 respectivement F21, F22.

Au cours d'une étape E50, on détermine quelle feuille terminale de l'arbre sera mise à jour. Si cette feuille n'existe pas, cette détermination comporte la création de la feuille terminale et l'ajout de ladite feuille terminale à l'arbre, éventuellement avec ses parents si ceux-ci n'existe pas.

De façon très avantageuse, aucune autre réorganisation de l'arbre n'est effectuée. Aucun noeud de l'arbre n'est détruit.

Autrement dit, conformément à l'invention, on ne fait qu'ajouter des noeuds dans l'arbre, aucun noeud n'étant détruit à aucun moment. Le fait de ne pas réarranger les noeuds de l'arbre est très avantageux par rapport aux solutions basées sur des arbres de type B-Tree.Dans un mode de réalisation.

De façon préférée, et comme décrit ici, la feuille est déterminée en appliquant une fonction à l'ensemble des identifiants des documents concernés par la mise à jour.

Dans l'exemple décrit ici, il s'agit plus particulièrement d'appliquer une fonction de hachage à la chaîne de caractère « DOC1 DOC2 DOC3 ».

Nous supposerons que le résultat de cette fonction de hachage est l'identifiant de la feuille terminale F21.

Au cours d'une étape E60, on met à jour un paquet d'informations pointé par cette feuille F21.

Si la feuille ne pointe vers aucun paquet d'informations, cette mise à jour consiste simplement à créer un lien logique entre la feuille nouvellement créée et le paquet d'informations (BLOC2) ; si la feuille pointe déjà vers un paquet d'informations, la mise à jour consiste à concaténer le nouveau paquet (BLOC2) au paquet déjà pointé par la feuille terminale F21.

Dans l'exemple de réalisation décrit ici, le paquet est comprimé au cours d'une étape E65.

On traite ensuite les objets suivants, à savoir chacun des mots compris dans l'ensemble des documents DOC1, DOC2, DOC3.

En référence à la **figure 4****,** on peut utiliser un paquet d'informations P21 comportant :
- une liste L21 des identifiants des documents DOC1, DOC2 comportant l'objet en cours de traitement dans la boucle E20 à E80 ; et
- le bloc de données BLOC2.

En référence à la **figure 5****,** nous supposerons que l'on ajoute un nouveau document DOC4 à la base documentaire BDOC.

Ce document DOC4 contient le texte « voiture rapide ».

Lorsque l'on met à jour l'index inversé correspondant à l'objet voiture, on suppose, dans cet exemple, que l'étape E50 de détermination détermine que la feuille terminale impactée par cette mise à jour est la feuille F11.

On fait donc pointer la feuille F11 vers un paquet d'informations P11 comportant :
- les identifiants de tous les documents concernés par la mise à jour comportant l'objet « voiture », à savoir une liste constituée par le singleton {DOC4} ; et
- un bloc d'informations BLOC4 pointé par cette liste L11 ; ce bloc d'informations comportant au moins la position « 1 » de l'objet voiture dans le document DOC4.

Le paquet 21 n'est pas mis à jour.

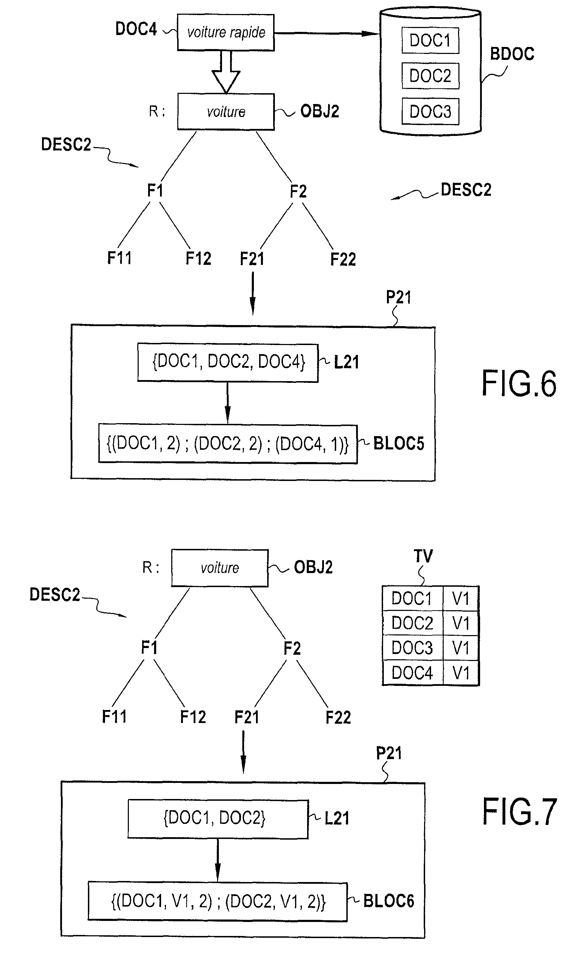

En référence à la **figure 6****,** on présente le résultat du procédé de mise à jour par l'ajout du document DOC4 dans la base documentaire BDOC, si le résultat de l'étape E50 de détermination produit la feuille terminale F21, celle-ci pointant déjà vers le paquet d'informations P21.

On voit, dans cet exemple, que la liste L21 des documents comportant l'objet « voiture » est augmentée de l'identifiant du document DOC4 et que le bloc BLOC5 pointé par cette liste comporte maintenant le bloc d'informations associé au document DOC4, les informations comportant la position 1 de l'objet voiture dans ce document.

Dans le mode de réalisation de la **figure 7****,** les blocs d'informations comportent en outre la version V1 des documents.

Dans ce mode de réalisation, le procédé de mise à jour selon l'invention comporte une étape E70 au cours de laquelle on met à jour une structure de données TV indépendante du descripteur DESC2 et comportant la dernière version de ces documents.

Ainsi, après l'ajout du document DOC4 dans la base documentaire BDOC, la structure de données TV comporte, pour chaque document DOC1 à DOC4 la dernière version V1 de ces documents dans la base documentaire.

Le bloc d'informations BLOC6 comporte aussi cette information pour chacun des documents.

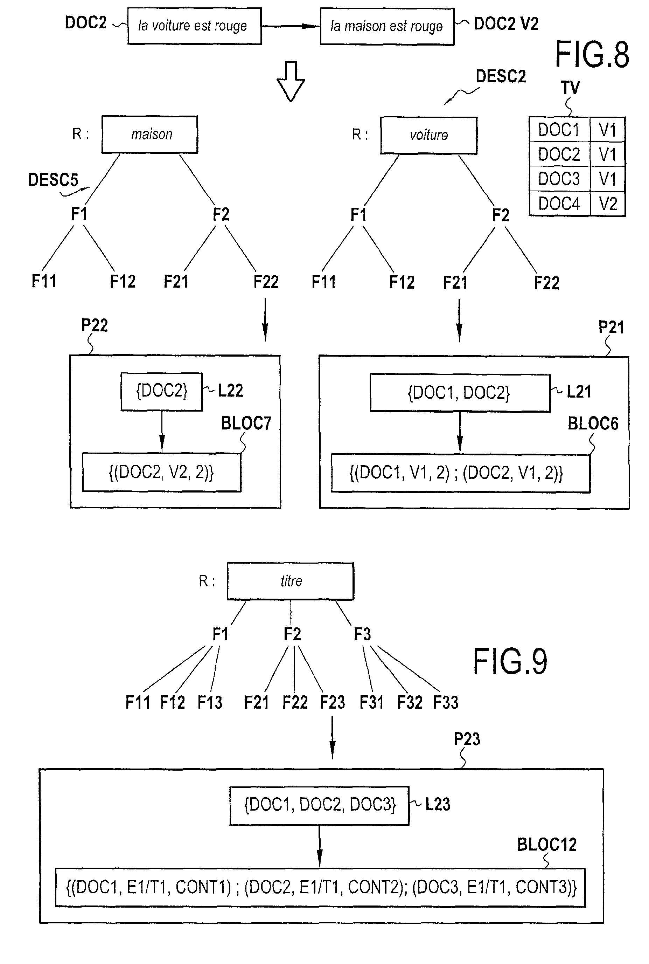

En référence à la **figure 8****,** on suppose que le document DOC2 est modifié, la version V2 de ce document comportant le texte « la maison est rouge ».

Conformément à cet aspect particulier de l'invention, la structure de données TV est mise à jour, la dernière version V2 du document DOC2 étant substitué à la version V1.

Par contre, et de façon très avantageuse, le descripteur du mot de l'objet « voiture » n'est pas modifié.

Bien entendu, un descripteur DESC5 est créé pour l'objet maison.

Aux figures 3 à 8, nous avons représenté des descripteurs dans lesquels les objets étaient des mots.

La **figure 9** représente un descripteur conforme à l'invention pour un objet constitué par le champ Titre.

Il s'agit ici d'un arbre à deux niveaux, le premier niveau comportant trois fils F1, F2, F3, chaque fils comportant lui-même trois fils (feuilles terminales).

On suppose dans cet exemple que la mise à jour de l'index du champ Titre lorsque les documents DOC1 à DOC3 sont ajoutés à la base documentaire impacte la feuille terminale F23, celle-ci étant déterminée au cours de l'étape E50 du procédé de mise à jour selon l'invention.

Dans l'exemple de la figure 9, on notera que la feuille terminale F23 pointe vers un paquet d'informations P23 comportant la liste L23 des documents DOC1, DOC2, DOC3 comportant un champ Titre, cette liste pointant vers le bloc BLOC12 déjà décrit.

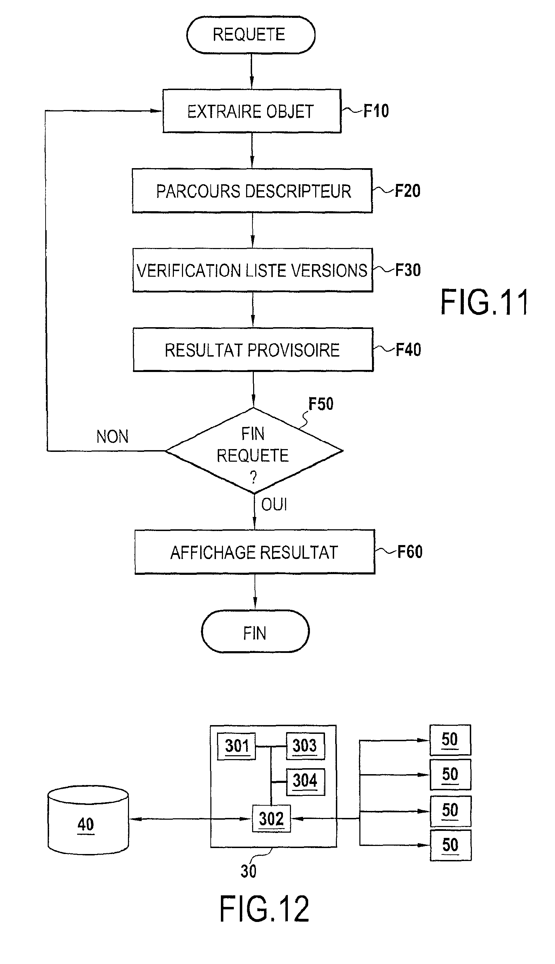

La **figure 11****,** représente les principales étapes d'un procédé de traitement d'une requête d'obtention d'au moins un document électronique conforme à un mode particulier de réalisation de l'invention.

Une telle requête peut être saisie par un utilisateur pour déterminer les documents comportant un ou plusieurs objets.

On peut par exemple utiliser une requête pour déterminer les documents comportant (l'objet OBJ1 et l'objet OBJ2) ou (l'objet OBJ1 ou l'objet OBJ2) toute expression régulière pouvant être utilisée.

Au cours d'une étape F10, on extrait le premier objet de la requête, puis, on parcourt le descripteur associé à cet objet jusqu'aux feuilles terminales de l'arbre (étape F20).

On obtient ainsi des paquets d'informations pointés par ces feuilles (étape F40) ces paquets comportant au moins un identifiant de document susceptible de comporter l'objet recherché.

En effet, dans un mode particulier de réalisation de l'invention, il se peut que le document concerné ait été modifié, sans que le descripteur de cet objet n'ait été mis à jour. C'est en effet le mode préféré de réalisation lorsque l'on utilise les numéros de version.

Par conséquent, afin de retenir définitivement le document pointé par une feuille terminale de l'arbre, on vérifie, dans cet exemple, si le numéro de version du document mémorisé dans la feuille est identique à celui mémorisé dans la structure de données indépendante TV (étape F30).

Bien entendu, lorsqu'on n'utilise pas de numéro de version, cette étape F30 de vérification n'est pas effectuée et la pertinence de l'objet, comme réponse à une requête, ne sera, par exemple, vérifiée que lors de l'accès aux documents correspondant à la requête.

En tout état de cause, à l'étape F40, on obtient ainsi une liste provisoire de documents, à savoir la liste des documents comportant l'objet en cours de traitement dans la boucle des étapes F10 à F50.

Puis, on traite tous les objets de la requête, tant que la requête n'est pas terminée (étape F50).

On obtient ainsi un ensemble de documents et on présente le résultat définitif à l'utilisateur au cours d'une étape F60 en ne conservant que les documents répondant à l'expression régulière comprise dans cette requête (intersection, union des ensembles de documents identifiés à chacune des itérations de l'étape F40).

La **figure 12** représente de façon schématique un serveur 30 conforme à l'invention.

Ce serveur peut être utilisé à la fois pour créer un index inversé conforme à l'invention et pour traiter une requête d'obtention d'au moins un document électronique compris dans une base documentaire 40.

Ce serveur 30 a l'architecture matérielle d'un ordinateur classique. Il comporte un processeur 301, une mémoire morte 303 adaptée à contenir des programmes d'ordinateur, une mémoire vive 304 nécessaire à l'exécution de ces programmes d'ordinateur par le processeur 301 et des moyens de communication 302 constitués par une carte réseau et des pilotes logiciels.

La mémoire morte comporte :
- un programme d'ordinateur conforme à l'invention dont les instructions permettent l'exécution des étapes du procédé de mise à jour d'index dont l'organigramme a été décrit à la figure 10 ; et
- un programme d'ordinateur conforme à l'invention dont les instructions permettent l'exécution des étapes du traitement de requêtes dont l'organigramme a été décrit en référence à la figure 11.

Dans l'exemple décrit ici le serveur 30 est relié par un réseau de communication non-référencé à une pluralité de dispositifs clients 50. Le réseau de télécommunication reliant le serveur 30 au dispositifs clients peut être de n'importe quel type et notamment un réseau local de type eternet ou un réseau public de type internet.

Les terminaux 50 sont utilisés pour demander la mise à jour de l'index à partir d'un ensemble de documents ajouté ou modifié dans la base documentaire et pour envoyer des requêtes traitées conformément à l'invention pour obtenir certains documents de la base documentaire qui comportent au moins un objet compris dans la requête. Cette requête peut contenir ou non une expression régulière.

## Revendications

1. Procédé de mise à jour d'un index inversé (IDX1, IDX2) à partir d'au moins un document électronique, chaque document électronique étant constitué par au moins un ensemble ordonné d'objets (OBJi), ce procédé comportant, pour chacun desdits objets :
- une étape (E30) d'identification d'un descripteur (DESC) dudit objet, ce descripteur étant représenté sous forme d'un arbre ;
- une étape (E50) de détermination d'une feuille terminale dudit arbre, ladite détermination comportant, si ladite feuille terminale n'existe pas, la création de cette feuille terminale et son ajout dans l'arbre, sans destruction de noeud ni autre réorganisation de l'arbre ; et
- une étape (E60) de mise à jour d'un paquet d'informations de taille variable pointé par ladite feuille par concaténation, ledit paquet d'informations comportant au moins la liste desdits documents comportant ledit objet.

2. Procédé de mise à jour selon la revendication 1, **caractérisé en ce que** ledit paquet d'informations comporte en outre la position dudit objet dans chacun des documents de ladite liste.

3. Procédé de mise à jour selon la revendication 1 ou 2, **caractérisé en ce que** ledit paquet d'informations comporte en outre la version dudit document, le procédé comportant une étape (E70) de mise à jour d'une structure de données (TV) indépendante dudit descripteur et comportant la dernière version desdits au moins un document.

4. Procédé de mise à jour selon l'une quelconque des revendications 1 à 3, **caractérisé en ce que** ladite détermination (E50) de ladite feuille terminale se fait de façon aléatoire.

5. Procédé de mise à jour selon l'une quelconque des revendications 1 à 3, **caractérisé en ce que** ladite feuille terminale est déterminée (E50) en appliquant une fonction prédéterminée à l'identifiant dudit au moins un document.

6. Procédé de mise à jour selon l'une quelconque des revendications 1 à 5, **caractérisé en ce qu'**il comporte une étape (E65) de compression dudit paquet d'informations.

7. Procédé de traitement d'une requête d'obtention d'au moins un document électronique, ladite requête comportant au moins un objet, ce procédé comportant :
- une étape (F10) d'obtention d'un descripteur dudit objet, ce descripteur étant représenté sous forme d'un arbre ;
- une étape de parcours dudit arbre jusqu'à au moins une feuille terminale dudit arbre ;
- une étape (F40) d'obtention d'un paquet d'informations pointé par ladite feuille, ledit paquet comportant au moins un identifiant de document susceptible de comporter ledit objet ; et
- une étape (F60) de présentation de l'identifiant desdits documents compatibles avec ladite requête.

8. Procédé selon la revendication 7 dans lequel ladite requête comporte une expression régulière, les identifiants des documents précités (F60) étant filtrés en fonction de ladite expression régulière.

9. Procédé selon la revendication 7 ou 8, dans lequel ledit paquet d'informations comporte un premier numéro de version dudit document, **caractérisé en ce qu'**il comporte :
- une étape (F30) d'obtention d'un deuxième numéro de version dudit document dans une structure de données (LV) différente dudit descripteur ;
- ladite étape (F60) de présentation ne prenant en compte que les identifiants dont lesdits premier et deuxième numéros de version sont identiques.

10. Serveur apte à mettre à jour un index inversé (IDX1, IDX2) à partir d'au moins un document électronique, chaque document électronique étant constitué par au moins un ensemble ordonné d'objets (OBJi), ce serveur comportant :
- des moyens (301) aptes à identifier, pour chacun desdits objets, un descripteur (DESC) de cet objet, ce descripteur étant sous forme d'un arbre ;
- des moyens (301) de détermination d'une feuille terminale dudit arbre, ladite détermination comportant, si ladite feuille terminale n'existe pas, la création de cette feuille terminale et son ajout dans l'arbre, sans destruction de noeud ni autre réorganisation de l'arbre ; et
- des moyens (301) de mise à jour d'un paquet d'informations de taille variable pointé par ladite feuille par concaténation, le paquet d'information comportant au moins la liste desdits documents comportant ledit objet.

11. Programme d'ordinateur comportant des instructions pour l'exécution des étapes du procédé de mise à jour d'un index inversé selon l'une quelconque des revendications 1 à 6 lorsque ledit programme est exécuté par un ordinateur.

12. Support d'enregistrement (303) lisible par un ordinateur (30) sur lequel est enregistré un programme d'ordinateur comprenant des instructions pour l'exécution des étapes du procédé de mise à jour de l'index inversé selon l'une quelconque des revendications 1 à 6.

13. Serveur apte à traiter une requête d'obtention d'au moins un document électronique à partir d'un index inversé, cette requête comportant au moins un objet, ce serveur comportant :
- des moyens (301) d'obtention d'un descripteur dudit objet, ce descripteur étant représenté sous forme d'un arbre ;
- des moyens (301) de parcours dudit arbre jusqu'à au moins une feuille terminale dudit arbre ;
- des moyens (301) d'obtention d'un paquet d'informations pointé par ladite feuille, ledit paquet comportant au moins un identifiant de document susceptible de comporter ledit objet ; et
- des moyens (301) de présentation de l'identifiant desdits documents compatibles avec ladite requête.

14. Programme d'ordinateur comportant des instructions pour l'exécution des étapes du procédé de traitement d'une requête selon l'une quelconque des revendications 7 à 9 lorsque ledit programme est exécuté par un ordinateur.

15. Support d'enregistrement (303) lisible par un ordinateur (30) sur lequel est enregistré un programme d'ordinateur comprenant des instructions pour l'exécution des étapes du procédé de traitement d'une requête selon l'une quelconque des revendications 7 à 9.
